# EUROPÄISCHE PATENTSCHRIFT

(11) **EP 1 347 026 B1**
(45) Veröffentlichungstag und Bekanntmachung des Hinweises auf die Patenterteilung: **21.09.2005**
(21) Anmeldenummer: 03004423.4
(22) Anmeldetag: 27.02.2003
(51) Int. Cl.: C09J 7/02

(54) **Haftklebeband und Verfahren zur Herstellung**
Pressure sensitive adhesive tape and preparation process
Bande adhesive sensible a la pression et méthode de préparation

(30) Priorität: 22.03.2002 DE 10212830; 10.07.2002 DE 10231065
(43) Veröffentlichungstag der Anmeldung: 24.09.2003
(73) Patentinhaber: tesa AG, 20253 Hamburg (DE)
(72) Erfinder: Husemann, Marc, Dr., 22605 Hamburg (DE); Zöllner, Stephan, Dr., 22043 Hamburg (DE); Storbeck, Reinhard, Dr., 22457 Hamburg (DE)

(56) Entgegenhaltungen:
- EP-A- 0 422 919
- EP-A- 0 453 254
- WO-A-00/47684
- WO-A-01/70894
- PATENT ABSTRACTS OF JAPAN vol. 2000, no. 01, 31. Januar 2000 (2000-01-31) -& JP 11 269436 A (LINTEC CORP), 5. Oktober 1999 (1999-10-05)

## Beschreibung

Die Erfindung betrifft ein Haftklebeband mit einem Träger und einer darauf aufgebrachten Beschichtung aus einer Haftklebemasse, sowie ein Verfahren zur Herstellung von Haftklebebändern. Die Erfindung betrifft das Arbeitsgebiet der Elektronenstrahl (ES-) vemetzten Haftklebemassen.

Durch immer größere Umweltauflagen und Kostendruck besteht zur Zeit der Trend zur Herstellung von Haftklebemassen ohne, oder nur mit geringen Mengen, Lösemittel. Dieses Ziel kann leicht durch die Hotmelt-Technologie verwirklicht werden. Ein weiterer Vorteil dieser Technologie ist die Produktionszeitverkürzung. Hotmelt-Anlagen können Klebemassen bedeutend schneller auf Träger oder Trennpapier laminieren und so Zeit und Geld einsparen.

Die Hotmelt-Technologie stellt aber immer höhere Anforderungen an die Klebemassen. Für hochwertige industrielle Anwendungen werden insbesondere Polyacrylate bevorzugt, da diese transparent und witterungsstabil sind. Neben diesen Vorteilen müssen diese Acrylathaftklebemassen aber auch hohen Anforderungen im Bereich Scherfestigkeit gerecht werden. Dies wird durch Polyacrylate mit hohem Molekulargewicht, hoher Polarität und anschließender effizienter Vernetzung erreicht. Auch andere Elastomere, die für Haftklebebandanwendungen eingesetzt werden, müssen zur Kohäsionssteigerung vernetzt werden. Beispiele hierfür sind Naturkautschukklebemassen, die bedeutend günstiger als Polyacrylate sind und daher für Verpackungsklebebänder eingesetzt werden. Auch diese werden zur Kohäsionssteigerung z.T. mit ES (Elektronenstrahlen) vernetzt. Haftklebemassen können generell thermisch, durch UV oder durch ESH vernetzt werden. Die thermische Vernetzung von Hotmelts verläuft nur über relativ komplexe Vernetzungsreaktionen und führt häufig zu Vergelungen vor der Beschichtung. Dagegen sind die UV und ESH Vernetzung bedeutend populärer. Die UV-Technologie ist vom apparativen Aufwand relativ kostengünstig, aber bedingt durch die einsetzbaren Photoinitiatoren und der ungünstigen Lichtabsorption von einigen Harz-abgemischten Haftklebemassen, lassen sich z.B. Acrylathaftklebebänder mit maximal 100 g/m² effizient vernetzen. Für Naturkautschukklebemassen ist die UV-Vernetzung noch ungünstiger. Hier wird die optische Transparenz des Materials durch Füllstoffe, wie z.B. Kreide, deutlich herabgesetzt und damit auch der maximal einsetzbare Masseauftrag. Ein weiterer limitierender Faktor sind die erzielbaren Bahngeschwindigkeiten. Die ESH-Technologie ist hierfür bedeutend besser geeignet. Bei hoher Beschleunigungsspannung der Elektronen werden auch Haftklebemassen mit hohem Masseauftrag vollständig durchdrungen und vernetzt.

Dennoch besitzt diese Technologie auch Nachteile. In der herkömmlichen Verfahrensanordnung wird das Haftklebeband auf einer Stahlwalze mit Elektronen bestrahlt. Um eine gleichförmige Vernetzung der Klebemasse zu erreichen, muss das Klebeband durchstrahlt werden. Während der kontinuierlichen Bestrahlung von Ballenware verbleiben zwischen dem Träger und der Stahlwalze Elektronen. Beim Verlassen des Trägermaterials verursachen diese eine Rückseitenschädigung des Trägermaterials. Dies gilt besonders für silikonisierte Trennpapiere. Es können z.T. bei hohen ES-Dosen Ausrupfungen beobachtet werden, die die Silikonschicht zerstören. Durch die Rückseitenschädigung erhöhen sich die Abrollkräfte des Haftklebebandes drastisch, wobei bei sehr großer Schädigung die Haftklebebänder nicht mehr abrollfähig sind und damit uneinsetzbar. Andere Trägermaterialien werden durch die ESH vollkommen zerstört oder verfärben sich. Auch für empfindliche Prozessliner besteht das identische Problem, da diese durch dauerhafte ES-Bestrahlung Ihre Wirkung verlieren.

Der Erfindung liegt daher die Aufgabe zugrunde, ein Verfahren zur Herstellung von Haftklebebändern sowie mit diesem Verfahren hergestellte besondere Haftklebebänder zur Verfügung zu stellen, wobei die Trägerschädigung durch ES-Härtung (insbesondere auf der Rückseite der Bänder) minimiert wird.

Erfindungsgemäß kann durch eine Trägermaterialmodifizierung eine deutliche Minderung der Rückseitenschädigung der Trägermaterialien erreicht werden.

Zur Lösung der Aufgabe ist bei einem Haftklebeband der eingangs genannten Art vorgesehen, dass der Träger mit wenigstens einer Schicht aus einem elektrisch leitenden Material ausgerüstet ist. Weitere vorteilhafte Ausführungsformen sind in den Unteransprüchen gekennzeichnet.

Während der ES-Vernetzung durchdringen die beschleunigten Elektronen die Haftklebemasse sowie ggf. das Trägermaterial oder Teile davon und werden an einer elektrisch leitfähigen Schicht über das gesamte Trägermaterial verteilt oder abgebremst. Die durch die Bestrahlung auftretende Trägerschädigung wird durch das Vorhandensein der elektrisch leitfähigen Schicht minimiert.

Zur Vernetzung können alle ES-vernetzbaren Haftklebemassen eingesetzt werden. Die Klebemassen sollen entsprechend des D. Satas [Handbook of Pressure Sensitive Adhesive Technology, 1989, Verlag VAN NOSTRAND REINHOLD, New York] haftklebende Eigenschaften besitzen. Für Acrylathaftklebemassen lassen sich vorzugsweise Polymere mit folgender Zusammensetzung einsetzen:
(A) Acrylsäure und Methacrylsäure-Derivate mit einem Anteil von 65-100 Gewichtsprozent,

   CH₂=C(R₁)(COOR₂) (l)

   wobei R₁ = H oder CH₃ ist und R₂ = eine Alkylkette mit 2-20 C-Atomen.
(B) Vinylverbindungen mit funktionellen Gruppen, Maleinsäureanhydrid, Styrol, Styrol-Verbindungen, Vinylacetat, Acrylamide, mit Doppelbindung funktionalisierte Photoinitiatoren etc.
mit einem Anteil von 0-35 Gewichtsprozent,

Für Naturkautschukklebemassen wird der Naturkautschuk bis zu einem frei wählbaren Molekulargewicht gemahlen und additiviert. Auch ES-vernetzbare Synthesekautschuklebemassen sind einsetzbar.
Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zur Weiterentwicklung können den erfinderischen Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Die auf diese Weise abgemischten Haftklebemassen werden aus Lösung oder als Hotmelt auf einen mit wenigstens einer Schicht aus einem elektrisch leitenden Material ausgerüsteten Träger aufgetragen. Der ES-resistentere Träger besitzt entweder zwischen Trägermaterial und Masseseite, oder zwischen Trägermaterial und Releasematerial oder zwischen Beidem eine elektrischleitende Schicht. Für letzteren Fall können die gleichen oder zwei unterschiedliche elektrisch-leitfähige Materialien eingesetzt werden.

Als Releasematerialien können alle dem Fachmann bekannten Materialen eingesetzt werden, wie z.B. Silikon-, PE- und Fluoroverbindungen. Eine entsprechende Auflistung ist D. Satas [Handbook of Pressure Sensitive Adhesive Technology, 1989, Verlag VAN NOSTRAND REINHOLD, New York] zu entnehmen. Als Trägermaterialien werden bevorzugt Papier (in jeglicher Form), PVC, PET, BOPP, Polyamide, Polyimide und weitere dem Fachmann bekannte Materialien, am meisten bevorzugt aber Papierträger eingesetzt.

Als elektrisch-leitfähige Materialien können alle Metalle oder Metalllegierungen eingesetzt werden oder elektrisch leitfähige Verbindungen, die nicht unter ES-Bestrahlung zerstört oder geschädigt werden. Zur Beschichtung wird das elektrisch-leitfähige Material bevorzugt in dünnen Schichten auf das Trägermaterial aufgedampft. Metalle können z.B. Aluminium, Silber, Kupfer, Titan, Vanadium etc. sein. Als elektrisch-leitfähige Materialien lassen sich aber auch alle anderen Verbindungen verwenden, die elektrisch-leitfähige Eigenschaften besitzen, wie z.B. auch Kunststoffe, wie Polyacrylnitril, Polyparavinylen (PPV) Polyacytelen, allgemein Verbindungen die in der Halbleiterindustrie als elektrisch-leitende Materialien eingesetzt werden und allgemein Verbindungen, die sich auch als LED-Materialien einsetzen lassen, wie z.B. Polythiophene, Polyanthracenderivate, Polypyrrol, Polyfluorene, substituierte PPV, 3,4-Polyethylendioxythiophene, Polyanilin, etc.. Diese elektrisch leitfähigen Materialien werden wiederum auf dem Träger bedampft oder in sehr dünnen Schichten aus Lösung oder als Hotmelt auf das Trägermaterial aufgetragen.

Die Dicke des elektrisch-leitfähigen Materials sollte sehr dünn sein, vorzugsweise zwischen 0,001 und 100 µm, so dass das Handling des ursprünglichen Trägermaterials möglichst unbeeinflusst bleibt. Für Metalle wird ein Effekt bereits mit Dicken größer 1 nm erreicht, aber der bevorzugte Bereich liegt zwischen 0.1 und 10 µm. Das elektrisch leitfähige Material erfüllt zwei Aufgaben: Zum einen werden durch die Leitfähigkeit die eintreffenden Elektronen über das gesamte Material verteilt, zum anderen wirken z.B. Metalle als Bremse und reduzieren die Geschwindigkeit der durchdringenden Elektronen, so dass die Energie der Elektronen, die das Releasematerial erreichen, bedeutend geringer ist.

Diese nun durch die elektrisch-leitende Schicht modifizierten Haftklebebänder werden mit ES gehärtet. Bei höheren Grenzschichtdosen wird im direkten Vergleich zwischen elektrisch-leitfähigem Trägermaterial und unbehandelten Träger eine Verbesserung der Rückseitenschädigung erreicht. Die Mindestdosis, bei der dieser Effekt auftritt, ist vom jeweiligen Haftklebeband abhängig. Vorteilhafte Dosen liegen zwischen 5 und 100 kGy, bei einer Beschleunigungsspannung von 70 bis 230 kV. Sobald ES-beschleunigte Elektronen das Releasematerial erreicht und/oder durchdringen, kann durch die elektrisch leitende Schicht eine Rückseitenschädigung ausgeschlossen oder bei sehr hohen Dosen und Beschleunigungsspannungen minimiert werden.

Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London.

Mit der Rückseitenschädigung korreliert direkt das Abrollverhalten des Haftklebebandes. Durch Eliminierung oder Verringerung der Rückseitenschädigung bleibt nach der ES-Vernetzung das Abrollverhalten auf dem gleichen Niveau oder verbessert sich gegenüber dem nicht mit einem Elektrisch-leitfähigen Material versehenden Träger.

Bei dem erfindungsgemäßen Verfahren zur Herstellung eines Haftklebebandes mit einem Träger und einer darauf aufgebrachten Beschichtung aus einer Haftklebemasse wird der Träger mit wenigstens einer elektrisch leitenden Schicht versehen, die Haftklebemasse sodann auf die eine oder eine außenliegende elektrisch leitende Schicht beschichtet und die Haftklebemasse durch ES gehärtet, wie dies im Zusammenhang mit den Beispielen und den Abbildungen noch näher erläutert wird.

Gemäß einer besonderen Verfahrensführung kann auch vorgesehen sein, dass der mit wenigstens einer elektrisch leitenden Schicht ausgerüstete Träger als Prozessträger im Kreislauf geführt wird, wobei die Haftklebemasse nach der ES-Härtung von der unterliegenden elektrisch leitenden Schicht abgenommen und auf einen weiteren Träger umkaschiert wird. In diesem Falle wird der Prozessträger durch den erfindungsgemäßen Aufbau gegenüber konventionellen Prozessträgern bedeutend weniger durch Elektronenstrahlen beschädigt. Von dem Prozessträger wird die Haftklebemasse im weiteren Verlauf des Verfahrens wieder abgenommen. Der Prozessträger sollte aus einem besonders ES-resistenten Material bestehen, wie z.B. einem Polyamid oder vorzugsweise einem Polyimid.

Im folgenden werden einzelne Ausführungsformen der Erfindung anhand von Zeichnungen näher erläutert. Es zeigen:
- Abb. 1:: Verschiedene modifizierte Trägermaterialien: Version 1: Leiter zwischen Träger und Haftklebemasse; Version 2: Leiter zwischen Träger und Haftklebemasse und zwischen Träger und Release-Schicht; Version 3: Leiter zwischen Träger und Release-Schicht;
- Abb. 2:: Verwendung eines mit elektrisch-leitender Schicht ausgerüsteten Trägers als Prozessträger bei der Herstellung eines nach ESH umkaschierten Haftklebebandes.

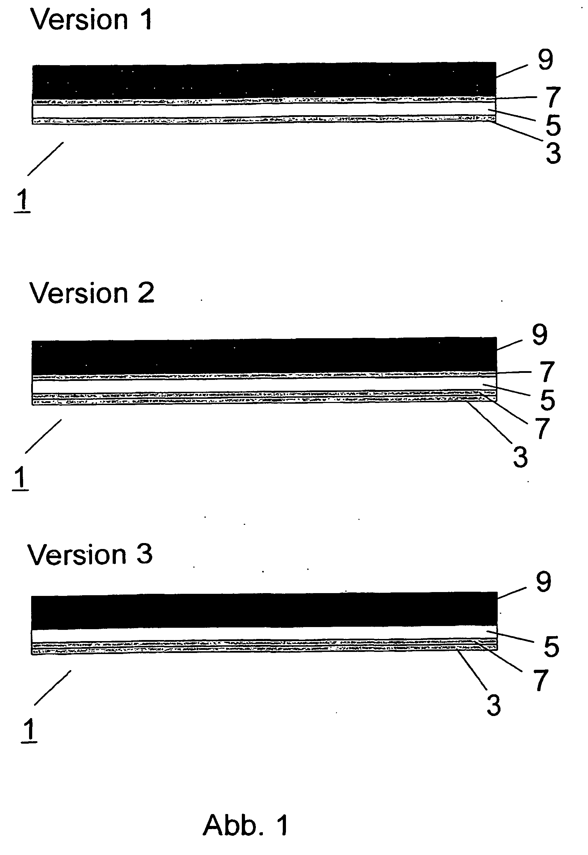

Abbildung 1 zeigt drei Versionen eines Haftklebebandes, das mit wenigstens einer elektrisch leitenden Schicht zur Verringerung von Trägerschädigungen modifiziert ist.

Version 1: zeigt schematisch im Querschnitt den Aufbau eines Haftklebebandes 1, bei dem ein mit einer Release-Schicht 3 abgedeckter Träger 5 mit einer elektrisch leitenden Schicht 7 ausgerüstet ist, auf der wiederum eine Beschichtung 9 aus einer Haftklebemasse aufliegt. Bei Durchstrahlen der Beschichtung 9 aus der Haftklebemasse während der ES-Härtung werden die Elektronen an der elektrisch leitenden Schicht 7 gebremst, teilweise umgelenkt und verteilt. Ein großer Teil der Strahlung wird von dem Träger 5 abgehalten, so dass Prozesse, die den Träger schädigen könnten, minimiert werden.

Version 2: zeigt ebenfalls schematisch im Querschnitt den Aufbau eines Haftklebebandes 1 gemäß einem anderen Ausführungsbeispiel, bei dem zusätzlich zu der elektrisch leitenden Schicht 7 zwischen Haftklebemasse und Träger eine weitere elektrisch leitende Schicht 7 zwischen Träger 5 und Release-Schicht 3 liegt.

Version 3 zeigt wiederum schematisch im Querschnitt den Aufbau eines dritten Ausführungsbeispiels eines Haftklebebandes 1, bei dem die elektrisch leitende Schicht 7 lediglich zwischen dem Träger 5 und der Release-Schicht 3 aufgebracht wurde. Hierdurch werden insbesondere die silikonhaltigen Trennpapiere geschützt.

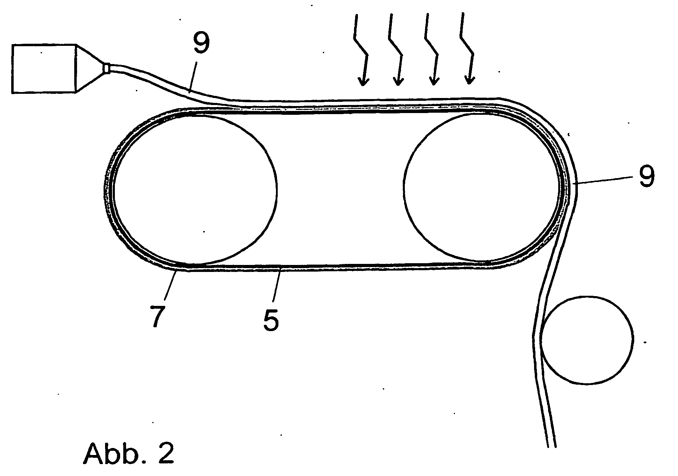

Abbildung 2 zeigt schematisch den Ablauf während eines Herstellungsverfahrens für Haftklebebänder, bei dem ein Träger 5 als umlaufender Prozessträger verwendet wird. Der im Kreislauf geführte Träger 5 ist an seiner Oberseite mit einer elektrisch leitenden Schicht 7 ausgerüstet, auf die durch eine Schlitzdüse eine Beschichtung 9 aus einer Hotmelt-Haftklebemasse aufgetragen wird. Während des Transports auf dem Prozessträger wird die Haftklebemasse dann einer ES-Vernetzung unterzogen, wie durch die Pfeile angedeutet. Auch hier wirkt die elektrisch leitende Schicht 7 verteilend und bremsend und vermindert dadurch die Schädigung des Prozessträgers 5. Nach der ES-Härtung wird die Haftklebemasse-Beschichtung 9 von dem Prozessträger abgenommen, umgeleitet und (wie hier nicht dargestellt) auf einen anderen Träger umkaschiert.

Im folgenden wird die Erfindung mit Hilfe von Versuchsbeispielen detaillierter erläutert.

### Beispielteil

Die für dieses Verfahren einsetzbaren Haftklebemassen wurden bereits in einem vorangegangenen Abschnitt beschrieben. Zur Bestrahlung wurde konventionell das Haftklebeband auf einer Kühlwalze mit ES bestrahlt. Als Referenz wurde ein Trennpapier mit 1.2 g/m² Silikonauftrag mit einer Acrylathaftklebemasse beschichtet.
Das Haftkleband setzte sich aus einem Polyacrylat mit folgender Monomerzusammensetzung zusammen: 6% Acrylsäure, 8 % N-tert.-Butylacrylamid, 76 % 2-Ethylhexylacrylat und 10 % Methylacrylat. Das Polymer war konventionell über eine freie radikalische Polymerisation hergestellt worden. Der Masseauftrag auf dem Trägermaterial betrug 130g/m². In den Referenzexperimenten wurde Ballenware eingesetzt und zunächst mit unterschiedlichen Grenzschichtdosen auf der offenen Seite des Trennpapiers bestrahlt.

Zur Charakterisierung bestimmte man die Abrollkräfte des Haftklebebandes sofort nach der Bestrahlung und nach Lagerung für 14 Tage bei 70°C.

### Die Ergebnisse sind in Tabelle 1 aufgelistet:

**Tabelle 1**

| Beispiel | Grenzschichtdosis [kGy] | Abrollkräfte sofort [cN/cm] | Abrollkräfte 14 Tage 70°C, [cN/cm] |
|---|---|---|---|
| 1 | 0 | 3 | 6 |
| 2 | 4 | 19 | 31 |
| 3 | 17 | 34 | 62 |

Zunächst wurden die unbestrahlten Nullmuster (Beispiel 1) vermessen. Die Abrollkraft war für dieses Haftklebeband mit 3 cN/cm bei Raumtemperatur und nach 14 Tage Lagerung bei 70°C mit 6 cN/cm sehr gering. Bei den ESH-bestrahlten Muster stiegen die Abrollkräfte stark an. Selbst bei einer Grenzschichtdosis von nur 4 kGy (Beispiel 2) lag die Abrollkraft bei 19 cN/cm. Durch Lagerung bei 70°C verstärkte sich dieser Effekt und die Abrollkräfte lagen nach 14 Tagen bei 31 cN/cm. 4 kGy ist aber eine Dosis, die bedeutend zu gering für eine effiziente Vernetzung einer Acrylathaftklebemasse ist. Es wurden auch noch einige ES-Bestahlungen mit 17 kGy Grenzschichtdosis (Beispiel 3) durchgeführt. Durch die ES-Bestrahlung wird das Trennmaterial optisch geschädigt. Es werden Ausrupfungen beobachtet. Dies spiegelt sich in den gemessenen Abrollkräften wieder. Nach der Bestrahlung wurde eine Abrollkraft von 34 cN/cm gemessen, die aber nach Lagerung bei 70°C noch auf 62 cN/cm anstieg. Das Klebeband war nahezu nicht mehr abrollbar.

Für die ESH-resistentere Variante wurde der selbe Papierträger mit Aluminium bedampft. Die Schichtdicke des Aluminiumleiters betrug in etwa 1 µm. Anschließend wurde dieses Material auf der aluminisierten Seite mit 1.2 g Silikonauftrag versehen. Dieses Trennpapier wurde auf der nicht-silikonisierten Seite mit 130 g/m² Polyacrylatmasse beschichtet. Der Produktaufbau entsprach somit - bis auf die eingefügte Aluminiumschicht - dem des Referenzmusters und der Aufbau ist in Abbildung 1 als Version 3 skizziert. Zur ES-Bestrahlung wurde wiederum Ballenware eingesetzt.
Die gewählten Grenzschichtdosen für das Al-modifizierte Haftklebeband lagen im Rahmen der Messfehler im gleichen Bereich, so dass die Messwerte unmittelbar miteinander vergleichbar sind (Tabelle 2).

**Tabelle 2**

| Beispiel | Grenzschichtdosis [kGy] | Abrollkräfte sofort [cN/cm] | Abrollkräfte 14 Tage 70°C, [cN/cm] |
|---|---|---|---|
| 2' | 4 | 5 | 8 |
| 3' | 17 | 6 | 9 |

Die Abrollkräfte belegen, dass die Aluminiumschicht im Träger einen positiven Effekt auf die Trennpapierschädigung ausübt. Optisch konnten keine Ausrupfungen mehr detektiert werden. Auch die gemessenen Abrollkräfte belegen, dass das Trennpapier durch die ESH nur relativ gering geschädigt wurde. Selbst bei einer Grenzschichtdosis von 17 kGy (Beispiel 3') und anschließender Lagerung für 14 Tage bei 70°C wurde nur ein maximaler Wert von 9 cN/cm gemessen. Diese Abrollkräfte liegen durchaus im für Haftklebebänder üblichen Bereich.

Im folgenden werden die Experimente im Detail beschrieben.

### Experimente

### Testmethoden

### Messung der Abrollkräfte

Die Messung der Abrollkraft erfolgte in einem Abzugswinkel von 90° und einer Abzugsgeschwindigkeit von 300 mm/min. Die Ermittlung der Zugkraft in cN/cm erfolgte mit einer Zugprüfmaschine bei standardisierten Bedingungen (23°C, 50 % Luftfeuchtigkeit). Die Messungen wurden mit Rollen konstanter Breite durchgeführt. Für die Messung wurden die ersten 2-3 cm des abgerollten Haftklebebandes verworfen. Die Messwerte entsprechen dem Mittelwert aus drei Messungen.

### Herstellung der Proben

### Herstellung des Polyacrylates und des Haftklebebandes

Ein für radikalische Polymerisationen konventioneller 200 L-Reaktor wurde mit 2400 g Acrylsäure, 3200 g N-tert.-Butylacrylamid, 4000 g Methylacrylat, 30,4 kg 2-Ethylhexylacrylat, und 30 kg Aceton/Isopropanol (97:3) befüllt. Nach 45 Minuten Durchleiten mit Stickstoffgas unter Rühren wurde der Reaktor auf 58°C hochgeheizt und 20 g Azoisobutyronitril (AIBN) hinzugegeben. Anschließend wurde das äußere Heizbad auf 75°C erwärmt und die Reaktion konstant bei dieser Außentemperatur durchgeführt. Nach 1 h Reaktionszeit wurde wiederum 20 g AIBN hinzugegeben. Die Reaktion wurde nach 48 h Reaktionszeit abgebrochen und auf Raumtemperatur abgekühlt. Die Klebemasse wurden dann vom Lösungsmittel im Aufkonzentrationsextruder befreit und als Hotmelt durch eine Düse auf ein Glassine Trennpapier der Fa. Laufenberg mit 1.2 g/m² Silikonauftrag beschichtet. Zur Analyse wurden die Abrollkräfte gemäß der Testmethode bestimmt.

### Herstellung des Al-modifizierten Trägermaterials

Das identische Papier, welches von der Fa. Laufenberg zur Herstellung von Trennpapieren eingesetzt wird (analog Referenz), wird mit Aluminium bedampft mit einer Schichtdicke von 1 µm bedampft. Anschließend wird mit dem identischen Silikonmaterial mit 1.2 g/m² auf diese Aluminiumschicht beschichtet. Dieser Al-modifizierte Träger wird dann analog zur Referenz mit der identischen Haftklebemasse beschichtet und als Ballenware eingesetzt.

### Elektronenbestrahlung

Die Elektronenbestrahlung erfolgte mit einem Gerät der Fa. Electron Crosslinking AB, Halmstad, Schweden. Das zu bestrahlende Haftklebeband wurde dabei über eine standardmäßig vorhandene Temperierwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Die Beschleunigerspannung betrug 230 kV. Die Grenzschichtdosis wurde auf jeweils 4 und 17 kGy eingeregelt, wobei die Dosis mit ESH-Dosisfolien überprüft wurde.

### Beispiel 2:

Zur Bestrahlung wurde eine konventionelle Stahlkühlwalze verwendet. Die Ballenware (300 m) des Haftklebebandes wurde mit 4 kGy ESH-Grenzschichtdosis bestrahlt. Die Bahngeschwindigkeit betrug 10 m/min. Zur Analyse wurden die Abrollkräfte gemäß der Testmethode bestimmt.

### Beispiel 3:

Zur Bestrahlung wurde eine konventionelle Stahlkühlwalze verwendet. Die Ballenware (300 m) des Haftklebebandes wurde mit 17 kGy ESH-Grenzschichtdosis bestrahlt. Die Bahngeschwindigkeit betrug 10 m/min. Zur Analyse wurden die Abrollkräfte gemäß der Testmethode bestimmt.

### Beispiel 2':

Es wurde analog Beispiel 2 vorgegangen, wobei sich das zu vernetzende Haftklebeband aus dem Polyacrylat und dem Aluminium-bedampften Träger zusammensetzte.

### Beispiel 3':

Es wurde analog Beispiel 3 vorgegangen, wobei sich das zu vernetzende Haftklebeband aus dem Polyacrylat und dem Aluminium-bedampften Träger zusammensetzte.

## Patentansprüche

1. Verfahren zur Herstellung eines Haftklebebandes mit einem Träger und einer darauf aufgebrachten Beschichtung aus einer vernetzten Haftklebemasse, wobei die Haftklebemasse durch Elektronenstrahlen gehärtet wird, **dadurch gekennzeichnet, dass**
der Träger zunächst mit wenigstens einer Schicht aus einem elektrisch leitenden Material ausgerüstet wird, danach auf den Träger oder die elektrisch leitende Schicht eine Haftklebemasse aufgetragen wird und in einem weiteren Schritt die Haftklebemasse durch Elektronenstrahlen gehärtet wird.

2. Verfahren nach Anspruch 1, **dadurch gekennzeichnet, dass** die Elektronenstrahlhärtung mit einer Beschleunigungsspannung von 70 bis 230 kV durchgeführt wird.

3. Verfahren nach zumindest einem der vorangehenden Ansprüche, **dadurch gekennzeichnet, dass**
die Elektronenstrahlhärtung mit einer Dosis zwischen 5 und 100 kGy durchgeführt wird.

4. Verfahren nach zumindest einem der vorangehenden Ansprüche, **dadurch gekennzeichnet, dass**
die wenigstens eine elektrisch leitende Schicht eine Metallschicht ist, die auf den Träger aufgedampft wird.

5. Verfahren nach zumindest einem der vorangehenden Ansprüche, **dadurch gekennzeichnet, dass**
die wenigstens eine elektrisch leitende Schicht eine Metallpulverschicht ist, die mit einem Bindemittel auf den Träger aufgesprüht wird.

6. Verfahren nach zumindest einem der Ansprüche 1 bis 3, **dadurch gekennzeichnet, dass**
als wenigstens eine elektrisch leitende Schicht eine elektrisch leitende Kunststoffschicht, die vorzugsweise durch Zusätze oder Dotierung leitend gemacht wird, auf den Träger aufgebracht wird.

7. Verfahren nach zumindest einem der vorangehenden Ansprüche, **dadurch gekennzeichnet, dass**
der mit wenigstens einer elektrisch leitenden Schicht ausgerüstete Träger als Prozessträger im Kreislauf geführt wird, wobei die Haftklebemasse nach der Elektronenstrahlhärtung von der unterliegenden elektrisch leitenden Schicht abgenommen und auf einen weiteren Träger umkaschiert wird.

8. Verfahren nach Anspruch 7, **dadurch gekennzeichnet, dass** der als Prozessträger verwendete Träger aus einem Polyimid-Material besteht.

## Claims

1. Process for producing a pressure sensitive adhesive tape comprising a backing and applied thereon a coating of a crosslinked pressure sensitive adhesive, the pressure sensitive adhesive being cured by electron beams, **characterized in that** the backing is firstly provided with at least one layer of an electrically conducting material, thereafter a pressure sensitive adhesive is applied to the backing or the electrically conducting layer, and in a further step the pressure sensitive adhesive is cured by electron beams.

2. Process according to Claim 1, **characterized in that** the electron-beam curing is conducted with an acceleration voltage of from 70 to 230 kV.

3. Process according to at least one of the preceding claims, **characterized in that** the electron-beam curing is conducted with a dose of between 5 and 100 kGy.

4. Process according to at least one of the preceding claims, **characterized in that** said at least one electrically conducting layer is a metal layer which is applied to the backing by vapour deposition.

5. Process according to at least one of the preceding claims, **characterized in that** said at least one electrically conducting layer is a metal powder layer which is applied with a binder to the backing by spraying.

6. Process according to any of Claims 1 to 3, **characterized in that** at least one electrically conducting layer applied to the backing is an electrically conducting plastics layer which is made conducting preferably by means of additions or doping.

7. Process according to at least one of the preceding claims, **characterized in that** the backing provided with at least one electrically conducting layer is passed in circulation as a process support, with the pressure sensitive adhesive following electron-beam curing being removed from the underlying electrically conducting layer and laminated onto a further backing.

8. Process according to Claim 7, **characterized in that** the backing used as process support is composed of a polyimide material.

## Revendications

1. Procédé pour la préparation d'une bande auto-adhésive avec un support et un revêtement appliqué sur celui-ci en masse auto-adhésive réticulée, la masse auto-adhésive étant durcie par des rayons électroniques, **caractérisé en ce que** le support est d'abord apprêté avec au moins une couche en un matériau électriquement conducteur, une masse auto-adhésive est ensuite appliquée sur le support ou la couche électriquement conductrice et la masse auto-adhésive est durcie dans une autre étape par des rayons électroniques.

2. Procédé selon la revendication 1, **caractérisé en ce que** le durcissement au rayonnement électronique est réalisé à une tension d'accélération de 70 à 230 kV.

3. Procédé selon au moins l'une quelconque des revendications précédentes, **caractérisé en ce que** le durcissement au rayonnement électronique est réalisé à une dose entre 5 et 100 kGy.

4. Procédé selon au moins l'une quelconque des revendications précédentes, **caractérisé en ce que** ladite au moins une couche électriquement conductrice est une couche en métal, déposée par évaporation sur le support.

5. Procédé selon au moins l'une quelconque des revendications précédentes, **caractérisé en ce que** ladite au moins une couche électriquement conductrice est une couche en poudre de métal, qui est pulvérisée avec un liant sur le support.

6. Procédé selon au moins l'une quelconque des revendications 1 à 3, **caractérisé en ce qu'**on applique sur le support comme au moins une couche électriquement conductrice, une couche en matériau synthétique électriquement conducteur qui est de préférence rendu conducteur par des additifs ou un dopage.

7. Procédé selon au moins l'une quelconque des revendications précédentes, **caractérisé en ce que** le support apprêté avec ladite au moins une couche électriquement conductrice est guidé comme support de processus en circulation, la masse auto-adhésive étant prélevée après le durcissement au rayonnement électronique de la couche électriquement conductrice sous-jacente et étant contre-collée sur un autre support.

8. Procédé selon la revendication 7, **caractérisé en ce que** le support utilisé comme support de processus est constitué d'un matériau polyimide.
